# FASCICULE DE BREVET EUROPEEN

(11) **EP 0 574 282 B1**
(45) Date de publication et mention de la délivrance du brevet: **25.09.1996**
(21) Numéro de dépôt: 93401317.8
(22) Date de dépôt: 21.05.1993
(51) Int. Cl.: G01S 13/00

(54) **Dispositifs de codage et décodage pour transmission en sous-bandes de fréquence**
Einrichtung zur Kodierung und Dekodierung zur Übertragung in Frequenzteilbändern
Coding and decoding device for the frequency subband transmission

(30) Priorité: 10.06.1992 FR 9206983
(43) Date de publication de la demande: 15.12.1993
(73) Titulaire: SOCIETE d'ETUDES de TELE-INFORMATIQUES et COMMUNICATIONS SYSTEME DITE SETICS: Société Anonyme :, F-75013 Paris (FR)
(72) Inventeur: Leclair, Philippe, F-92160 Antony (FR); Tordjman, Nathalie, F-75013 Paris (FR)
(74) Mandataire: Martinet & Lapoux

(56) Documents cités:
- EP-A- 0 304 890
- WO-A-91/03892
- US-A- 5 054 075

## Description

La présente invention concerne d'une manière générale des opérations de codage et décodage à l'émission et la réception dans un système de transmission à haute fréquence du type numérique entre une station terrestre et un satellite, ou du type radar ou sonar entre un émetteur et un récepteur, ou bien encore dans un système de transmission numérique acoustique sous-marine.

Il est connu, dans un système radar ayant une portée donnée que, approximativement, la résolution en distance est inversement proportionnelle à la largeur du spectre de fréquence du signal émis, et la résolution en vitesse radiale est inversement proportionnelle à la durée du signal utile émis. Les développements des radars modernes se sont dont orientés vers des émissions à modulation de fréquence dont le spectre est large et dont les impulsions ou plutôt les durées de mesure sont longues.

En outre, la portée du radar dépend de l'énergie du signal émis pendant la durée d'une mesure, et une grande portée est plus aisément obtenue avec des impulsions ou des mesures longues et une puissance faible. Cette remarque rejoint les avantages de la transmission à accès multiple à répartition en fréquence (AMRF) dans des transmissions par satellite, particulièrement dans la liaison montante de stations terriennes vers un satellite, consistant à émettre une puissance relativement faible et à utiliser des antennes émettrices de tailles réduites.

Un système de transmission à étalement de spectre par AMRF est par exemple connu du document no. 91/03892.

Pour détecter des cibles données à différentes vitesses et les distinguer de cibles parasites, un traitement de voies au moyen de filtres Doppler est nécessaire de manière à éliminer les échos parasites dans toute la bande de fréquence.

L'invention vise à fournir un codage particulier d'un signal radar présentant les avantages notamment d'un radar à large bande tout en analysant à la réception des fonctions d'ambiguïté différentes en distance ainsi qu'en vitesse par rapport à des sous-bandes de fréquence prédéterminées à l'émission. En d'autres termes, l'invention prévoit un codage en sous-bandes qui définit un radar à "large bande". Un tel codage est également applicable selon l'invention à la transmission d'un signal numérique, indépendamment de la nature des informations utiles qu'il supporte et de la composition initiale de celui-ci en signaux ou canaux numériques multiplexés.

Ainsi, un dispositif de codage selon l'invention peut coder un signal numérique après échantillonnage et démultiplexage de celui-ci dans un émetteur de transmission numérique, ou coder répétitivement des séquences pseudo-aléatoires orthogonales échantillonnées dans un émetteur radar ou sonar, afin d'émettre un signal codé en sous-bandes de fréquence. Le dispositif de décodage selon l'invention décode le signal codé reçu en bande base en des signaux échantillonnés composants correspondant aux sous-bandes. Ces signaux échantillonnés sont multiplexés en un signal numérique récupéré pour un récepteur de transmission numérique, ou sont appliqués à des moyens pour les autocorréler et intercorréler afin d'en déduire en outre des position et vitesse de cibles dans un récepteur radar ou sonar.

Selon l'invention, un dispositif de codage code plusieurs signaux échantillonnés parallèles en un signal codé à au plus N sous-bandes de fréquence, où N est un entier pair égal à 2^{K} et K est un entier quelconque positif, et est caractérisé en ce que
les fréquences d'échantillonnage des signaux échantillonnés et les largeurs des sous-bandes sont respectivement des produits d'une fréquence d'échantillonnage de référence par des facteurs 2^{k} et des produits d'une largeur de bande de référence par des facteurs 2^{k}, où k est un entier compris entre 0 et K, et le signal codé présente une fréquence d'échantillonnage égale à la somme des fréquences d'échantillonnage des signaux échantillonnés, et
le dispositif de codage comprend plusieurs circuits numériques élémentaires de transformation de Fourier inverse à deux points et de filtrage qui sont reliés entre eux suivant une structure arborescente convergeant à partir d'entrées parallèles recevant les signaux échantillonnés vers une sortie transmettant le signal codé échantillonné, des première et seconde entrées de chacun des circuits élémentaires étant respectivement reliées soit à deux entrées recevant deux signaux échantillonnés à la fréquence de référence, soit chacune à la sortie d'un circuit élémentaire ou à la sortie d'un moyen à retard recevant un signal échantillonné à une fréquence supérieure à la fréquence de référence, et la sortie du circuit élémentaire étant reliée soit à l'une des deux entrées d'un circuit élémentaire, soit à la sortie transmettant le signal codé échantillonné.

Un dispositif de décodage selon l'invention décode un signal codé à au plus N sous-bandes de fréquence tel que celui produit par le dispositif de codage, en plusieurs signaux échantillonnés parallèles, où N est un entier pair égal à 2^{K} et K est un entier quelconque positif, et est caractérisé en ce que
les fréquences d'échantillonnage des signaux échantillonnés et les largeurs des sous-bandes sont respectivement des produits d'une fréquence d'échantillonnage de référence par des facteurs 2^{k} et des produits d'une largeur de bande de référence par des facteurs 2^{k}, où k est un entier compris entre 0 et K, et le signal codé présente une fréquence d'échantillonnage égale à la somme des fréquences d'échantillonnage des signaux échantillonnés, et
le dispositif de décodage comprend plusieurs circuits numériques élémentaires de filtrage et de transformation de Fourier directe à deux points qui sont reliés entre eux suivant une structure arborescente divergeant à partir d'une entrée recevant le signal codé échantillonné vers des sorties parallèles transmettant les signaux échantillonnés, une entrée d'un circuit élémentaire étant reliée soit à l'entrée recevant le signal codé, soit à l'une des deux sorties d'un circuit élémentaire, et des première et seconde sorties d'un circuit élémentaire étant respectivement reliées soit chacune à l'entrée d'un circuit élémentaire, ou à une entrée d'un moyen à retard transmettant un signal échantillonné à une fréquence supérieure à la fréquence de référence, soit à deux sorties transmettant des signaux échantillonnés à la fréquence de référence.

D'autres caractéristiques et avantages de l'invention apparaîtront plus clairement à la lecture de la description suivante de plusieurs réalisations préférées de l'invention, en référence aux dessins annexés correspondants dans lesquels :
- les figures 1 et 2 sont des blocs-diagrammes schématiques d'un émetteur et d'un récepteur pour transmission numérique comprenant un dispositif de codage et un dispositif de décodage à sous-bandes de fréquence selon l'invention, respectivement;
- les figures 3 et 4 sont des blocs-diagrammes schématiques d'un synthétiseur à transformateur de Fourier inverse et d'un analyseur à transformée de Fourier directe relatifs à des sous-bandes de fréquence de largeur égale et inclus dans les dispositifs de codage et décodage selon une réalisation particulière, respectivement;
- les figures 5 et 6 sont des blocs-diagrammes schématiques d'un synthétiseur et d'un analyseur à structure arborescente de transformation relative à cinq sous-bandes de fréquence selon un exemple de réalisation de l'invention, respectivement;
- la figure 7 est un bloc-diagramme schématique d'un circuit élémentaire de transformation à deux points et de filtrage inclus dans le synthétiseur de la figure 5;
- les figures 8 et 9 sont des diagrammes du spectre de fréquence et de la réponse de phase du synthétiseur de la figure 5 selon un exemple préféré;
- la figure 10 est un bloc-diagramme schématique d'un circuit élémentaire de filtrage et de transformation à deux points inclus dans l'analyseur de la figure 6;
- les figures 11 et 12 sont des blocs-diagrammes schématiques d'émetteur et récepteur radar ou sonar de préférence à bande de fréquence étroite incluant un synthétiseur et un analyseur selon l'invention, respectivement; et
- les figures 13 et 14 sont des blocs-diagrammes schématiques de systèmes émetteur et récepteur radar ou sonar de préférence à large bande de fréquence étroite incluant des synthétiseurs et des analyseurs selon l'invention, respectivement.

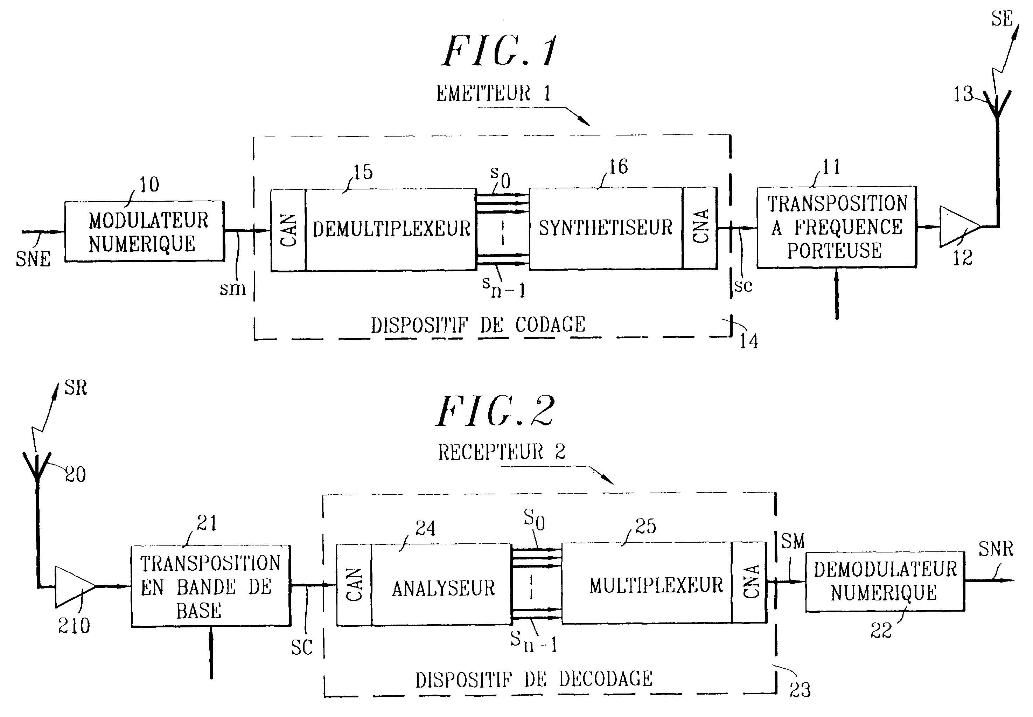

A titre de premier exemple de réalisation préférée selon l'invention, on se réfère à un système de codage-décodage pour transmission numérique du type liaison radio entre deux stations terrestres hertziennes, ou entre une station terrestre et un satellite ou bien pour transmission numérique acoustique sous-marine. Comme montré aux figures 1 et 2 le système comprend un émetteur 1 pour coder un signal numérique SNE en un signal d'émission codé en sous-bandes de fréquence SE, et un récepteur 2 pour décoder le signal SE reçu à travers le moyen de transmission entre l'émetteur et le récepteur, matérialisé ici par une antenne d'émission 13 et une antenne de réception 20, en un signal numérique régénéré SNR.

En référence à la figure 1, l'émetteur 1 comprend classiquement en entrée, un modulateur numérique 10 et, en sortie, un circuit de transposition à fréquence porteuse 11 suivi d'un amplificateur micro-onde relié à l'antenne d'émission 13, ainsi qu'un dispositif de codage 14 selon l'invention qui est interconnecté entre la sortie du modulateur 10 et l'entrée de signal à transposer du circuit 11. Le modulateur numérique 10 peut être un modulateur de phase (PSK), un modulateur d'amplitude en quadrature (QAM) , ou bien encore un modulateur d'amplitude orthogonal (OQAM) lorsque les sous-bandes de codage se chevauchent sensiblement. Le dispositif de codage comprend un démultiplexeur 15 et un synthétiseur 16. Le démultiplexeur 15 démultiplexe le signal modulé sm sortant du modulateur 10 en plusieurs signaux démultiplexés s_{O} à sₙ₋₁, entrant dans le synthétiseur 16 et échantillonnés à des fréquences égales ou différentes comme on le verra par la suite. Le synthétiseur 16 formant un premier objet principal de l'invention, sera détaillé par la suite; il filtre les signaux démultiplexés dans au plus n sous-bandes de fréquence de codage différentes afin de produire un signal synthétisé codé sc. Puis le circuit 11 transpose le signal sc à une fréquence porteuse prédéterminée, et l'amplificateur 12 amplifie le signal transposé en le signal d'émission SE émis par l'antenne 13.

Comme montré à la figure 2, le récepteur 2 comprend classiquement, en entrée, un circuit de transposition en bande de fréquence de base 21 relié à l'antenne de réception 20 à travers un amplificateur micro-onde 210 et, en sortie, un démodulateur numérique 22, ainsi qu'un dispositif de décodage 23 selon l'invention qui est interconnecté entre la sortie du circuit 21 et l'entrée du démodulateur 22. Les circuits 21, 22 et 23 du récepteur 2 effectuent des opérations réciproques à celles effectuées par les circuits 11, 10 et 14 dans l'émetteur 1. Le circuit 21 transpose le signal SR correspondant au signal d'émission SE et capté par l'antenne 20 en un signal reçu codé en bande de base SC. Le dispositif de décodage 23 comprend un analyseur 24 et un multiplexeur 25. L'analyseur 23, formant le second objet principal de l'invention, sera détaillé par la suite; il extrait dans le signal SC des signaux composants échantillonnés S_{O} à Sₙ₋₁ qui correspondent aux n sous-bandes de codage et qui sont multiplexés dans le multiplexeur 25 en un signal multiplexé modulé SM. Finalement, le signal SM est démodulé en le signal régénéré SNR dans le démodulateur 22 opérant une démodulation correspondant à la modulation dans le modulateur 10.

Les dispositifs de codage et décodage 14 et 23 sont des circuits numériques. Le démultiplexeur 15 et l'analyseur 24 comprennent chacun en entrée un convertisseur analogique-numérique pour échantillonner et quantifier les signaux sm et SC; réciproquement, le synthétiseur 16 et le multiplexeur 25 comprennent chacun en sortie un convertisseur numérique-analogique. L'échantillonnage dans les convertisseurs est effectuée à une fréquence d'échantillonnage de référence supérieure au double du débit binaire des signaux numériques SNE et SNR, chaque échantillon ou élément de séquence étant quantifié sous la forme d'un mot à bits parallèles. Les moyens de filtrage détaillés ci-après dans le synthétiseur et l'analyseur présentent donc des taux d'échantillonnage qui sont augmentés et diminués afin que le théorème d'échantillonnage de Nyquist ne soit pas violé, c'est-à-dire les filtres relatifs à chaque sous-bande sont des filtres de Nyquist à racine carrée.

La bande de fréquence utile du signal codé peut être par exemple inférieure à 10% de la fréquence porteuse de manière à réaliser une transmission en bande étroite.

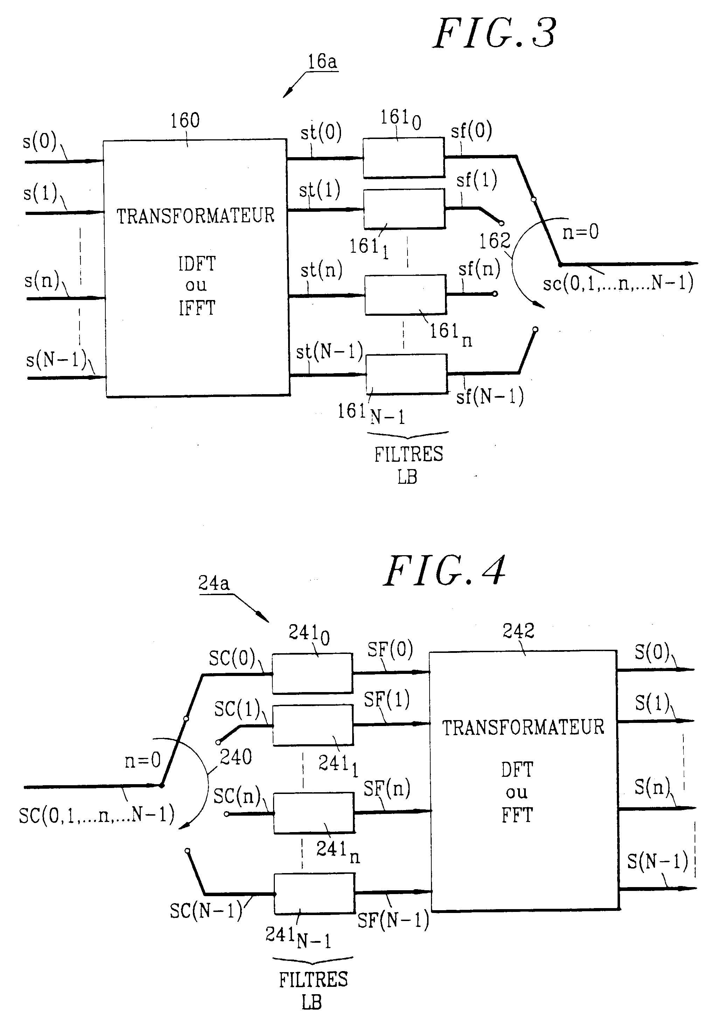

Selon une réalisation simple, il est supposé que toutes les sous-bandes de fréquence de codage BF_{O} à BF_{N-1} ont une largeur identique LB, et sont en nombre prédéterminé N, où N est une puissance de deux. Dans ce cas, à chaque séquence d'échantillons {s(n)} de N signaux s(0) à s(N-1) fournis en parallèle à la même fréquence d'échantillonnage de référence par le démultiplexeur 15 est appliquée classiquement une transformation de Fourier discrète inverse (IDFT) ou une transformation de Fourier rapide inverse (IFFT) dans le synthétiseur. Un synthétiseur 16a selon cette réalisation particulière comprend, en référence à la figure 3, un transformateur de Fourier inverse à N points 160, un banc de N filtres numériques parallèles polyphasés 161₀ à 161_{N-1} ayant sensiblement la largeur de bande LB, et un commutateur 162 à N entrées et une sortie. Le transformateur 160 transforme à un instant donné toute séquence entrante {s(n)} en une séquence transformée {st(n)} à N éléments qui sont respectivement appliqués aux entrées des filtres 161_{O} à 161_{N-1}. Chaque élément de signal composant st(n) de la séquence transformée est filtré passe-bande dans le filtre respectif 161ₙ en un élément filtré sf(n), n étant un nombre entier compris entre 0 et N-1. Les N éléments parallèles de la séquence filtrée {sf(n)} sont lus un à un par le commutateur 162 dont les N entrées sont reliées aux sorties des filtres 161_{O} à 161_{N-1} , afin de produire une séquence série {sc(n)} convertie en le signal codé sc à la sortie du synthétiseur 16a reliée au circuit de transposition 11. Le signal codé sc est ainsi un signal présentant N sous-bandes consécutives BF_{O} à BF_{N-1} ayant des largeurs identiques LB.

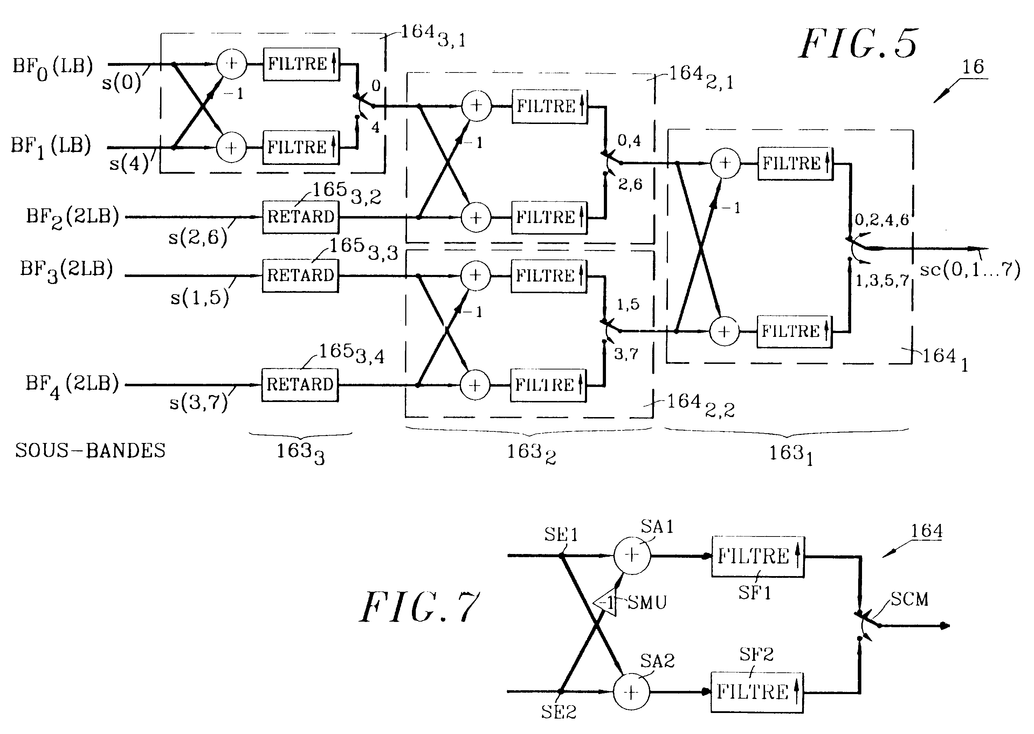

L'analyseur 24a correspondant au synthétiseur 16a montré à la figure 3 est détaillé à la figure 4. L'analyseur 24a comprend un commutateur 240 ayant une entrée et N sorties, un banc de filtres numériques parallèles polyphasés 241_{O} à 241_{N-1} ayant des entrées reliées respectivement aux sorties du commutateur 240, et un transformateur à transformation de Fourier discrète (DFF) ou rapide (FFF) à N points 242 ayant N entrées reliées respectivement aux sorties des filtres 241₀ à 241_{N-1} et N sorties reliées respectivement aux sorties du multiplexeur 25. Une séquence du signal codé reçu {SC(n)} est décomposée en N éléments SC(O) à SC(N-1) par le commutateur 240. Après filtrage de ces éléments en des éléments filtrés SF(O) à SF(N-1), le transformateur restitue N éléments décodés S(O) à S(N-1) à un instant donné, et plus généralement N signaux composants qui, après multiplexage et conversion numérique-analogique dans le multiplexeur 25, forment le signal multiplexé décodé SM.

Les filtres 161_{O} à 161_{N-1} sont des filtres passe-bande d'interpolation qui fonctionnent à des taux d'échantillonnage dépendant de la largeur LB des sous-bandes de codage et qui peuvent être différents des taux d'échantillonnage dans les filtres passe-bande de décimation 241_{O} à 241_{N-1} de l'analyseur. Tous ces filtres peuvent être supprimés dans le synthétiseur 16a et l'analyseur 24a.

Selon une réalisation généralisée, l'invention s'applique au codage d'un signal numérique en un signal codé à sous-bandes de fréquence ayant des largeurs de bande différentes. En effet, il est connu que la transformée de Fourier d'une séquence à N=2^{K} éléments peut être décomposée en K = log₂N étapes de transformée suivant une structure arborescente, en commençant par une étape à N/2 transformées élémentaires parallèles à deux points, puis en traitant dans l'étape suivante deux par deux les transformées à 2 points par des transformations élémentaires parallèles à deux points, et ainsi de suite jusqu'à une dernière étape combinant deux transformées à N/2 points. En supprimant des premières transformations dans les premières étapes intermédiaires, un signal sm est codé selon l'invention en des sous-bandes de fréquence ayant des largeurs différentes mais multiples les unes des autres par des facteurs 2^{k}, où k est un entier positif compris entre 0 et K.

A titre d'exemple, le synthétiseur 16 montré à la figure 5 et l'analyseur 24 montré à la figure 6 comprennent chacun K=3 étages à transformations parallèles, et donc sont relatifs à des séquences {s(n)} à N=2³=8 éléments du signal sm à coder. Le nombre des sous-bandes de fréquence de codage sensiblement disjointes est inférieur à N=8 et selon cet exemple égal à cinq. Ainsi sont prévues des première et seconde sous-bandes BF_{O} et BF₁ ayant une largeur de référence LB, et des troisième, quatrième et cinquième sous-bandes BF₂, BF₃ et BF₄ ayant des largeur 2¹.LB. La bande utile du signal codé sc est ainsi sensiblement égale à (2.LB + 3.2.LB)=8.LB.

En référence à la figure 5, le synthétiseur 16 présente une structure arborescente dans laquelle les branches sont regroupées deux par deux à partir des entrées de manière à converger vers un tronc en sortie. Selon la réalisation illustrée, le synthétiseur possède cinq entrées. Le démultiplexeur 15 dans le dispositif de codage 14 est alors organisé de telle manière qu'il transmette le premier élément {s(0)}, le cinquième élément {s(4)}, le doublet de troisième et septième éléments {s(2),s(6)}, le doublet de second et sixième éléments {s(1),s(5)} et le doublet de quatrième et huitième éléments {s(3), s(7)} d'une séquence initiale {s(0,1,2,3,4,5,6,7)} à des première à cinquième entrées du synthétiseur respectivement. Cette sélection d'éléments est due aux décompositions successives d'une transformation à N=8 points en des transformations à deux points, de manière à retrouver en série les éléments sc(0) à sc(7) de la séquence codée correspondante {sc(0 à 7)} en sortie du synthétiseur.

Le synthétiseur montré à la figure 5 comprend K=3 étages à transformations et filtrages parallèles 163₃ , 163₂ et 163₁ de profondeurs (rangs) respectives 3, 2 et 1 comprenant chacun au moins un circuit numérique élémentaire de transformation inverse à 2 points et de filtrage.

Comme montré très schématiquement à la figure 7, un circuit élémentaire de transformation et filtrage 164 dans le synthétiseur comporte à partir de deux première et seconde entrées SE1 et SE2, en pratique constituées par des registres d'entrée, des premier et second sommateurs SA1 et SA2, des premier et second filtres numériques SF1 et SF2 ayant des bandes consécutives à largeurs de bande identiques, et un commutateur SCM à deux entrées et une sortie. Les sommateurs SA1 et SA2 ont des premières entrées reliées aux première et seconde entrées SE1 et SE2, c'est-à-dire à des sorties de l'étage combinatoire précédant produisant des signaux échantillonnés à une fréquence supérieure à la fréquence de référence, ou à deux sorties du démultiplexeur 15. La seconde entrée du sommateur SA1 est reliée à l'entrée SE2 à travers un multiplieur par -1, SMU, tandis que la seconde entrée du sommateur SA2 est reliée directement à l'entrée SE1. Le multiplieur SMU sert à une inversion de spectre (transformation d'un nombre complexe en son conjugué); en d'autres termes, l'ensemble à deux sommateurs et un multiplieur d'inversion résulte de la décomposition d'une série de Fourier paire en deux sous-séries de Fourier "paire" et "impaire". Les signaux en sortie des sommateurs SS1 et SS2 sont représentatifs de la transformée de Fourier à deux points d'une séquence à deux éléments parallèles présentés aux entrées SE1 et SE2. Puis les deux signaux transformés sortant des sommateurs SA1 SA2 sont respectivement filtrés dans les filtres SF1 et SF2 en deux signaux filtrés qui sont sérialisés à travers le commutateur SCM dont les entrées sont reliées aux sorties des filtres SF1 et SF2 et qui bascule au double de la fréquence d'échantillonnage des signaux reçus aux entrées SE1 et SE2. Les filtres numériques SF1 et SF2 comprennent classiquement en entrée un filtre passe-bas de mise en forme et en sortie un filtre passe-bande d'interpolation doublant le débit des échantillons reçus en insérant un bit de valeur zéro entre deux échantillons à filtrer. Le cas échéant, pour les bandes latérales BF_{O} et BF₄, le filtre d'interpolation peut être un filtre passe-bas ou un filtre passe-haut.

Selon la réalisation illustrée à la figure 5, l'étage de transformation 163₃ comprend un circuit élémentaire 164_{3,1} et trois lignes à retard 165_{3,2}, 165_{3,3} et 165_{3,4} bien que selon d'autres variantes, l'étage 163₃ pourrait comprendre encore un, deux, ou trois autres circuits élémentaires parallèles à la place d'une, deux ou trois des lignes à retard. Le circuit 164_{3,1} reçoit par ses première et seconde entrées les signaux échantillonnés s(0) et s(4) et produit un signal sous-codé sc(0,4). Les lignes à retard 165_{3,2} , 165_{3,3} et 165_{3,4} sont des registres à décalage qui retardent les doublets {s(2), s(6)}, {s(1), s(5)} et {s(3), s(7)} de la durée de traitement dans un circuit élémentaire, tel que le circuit 164_{3,1}.

Le second étage de transformation 163₂ comprend deux circuits élémentaires 164_{2,1} et 164_{2,2}. Les première et seconde entrées de circuit 164_{2,1} sont reliées respectivement à la sortie du commutateur dans l'étage 164_{3,1} et à la sortie de la ligne à retard 165_{3,2}. Les première et seconde entrées du second circuit élémentaire 164_{2,2} sont reliées respectivement aux sorties des lignes à retard 165_{3,3} et 165_{3,4}.

La largeur de bande des filtres dans l'étage de transformation 163₂ est sensiblement égale au double de celle des filtres dans l'étage précédent 163₃ et à la moitié de celle des filtres dans l'étage suivant 163₁. Les sorties des commutateurs dans les circuits élémentaires 164_{2,1} et 164_{2,2} produisent respectivement des séquences sous-codées {sc(0,2,4,6)} et {sc(1,3,5,7)}. D'une manière compatible avec les rapports entre largeurs des sous-bandes, la fréquence d'échantillonnage est doublée lors du passage d'un étage de transformation de profondeur k à l'étage de transformation suivant de profondeur k-1.

Selon une autre variante, par exemple lorsque les signaux entrants s(1), s(3), s(5) et s(7) sont à coder dans une sous-bande commune de largeur 4LB, une seule sortie du démultiplexeur 15 transmet des séquences sérialisées d'éléments de ces signaux à la seconde entrée de l'étage de transformation suivant 163₁ à travers une unique ligne à retard imposant un retard sensiblement égal au double de celui conféré par chacune des lignes à retard 165_{3,3} et 165_{3,4}, c'est-à-dire égal au produit de la durée de traitement des signaux dans chacun des circuits 164_{3,1} et 164_{2,1} et du logarithme à base deux, soit 2, du rapport de la fréquence d'échantillonnage du signal s(1,3,5,7) avec la fréquence de référence. L'unique ligne à retard remplace ainsi les lignes à re3tard 165_{3,3} et 165_{3,4} et le circuit élémentaire 164_{2,2} . Les lignes à retard maintiennent ainsi la synchronisation des signaux sous-codés en sortie des étages de transformation.

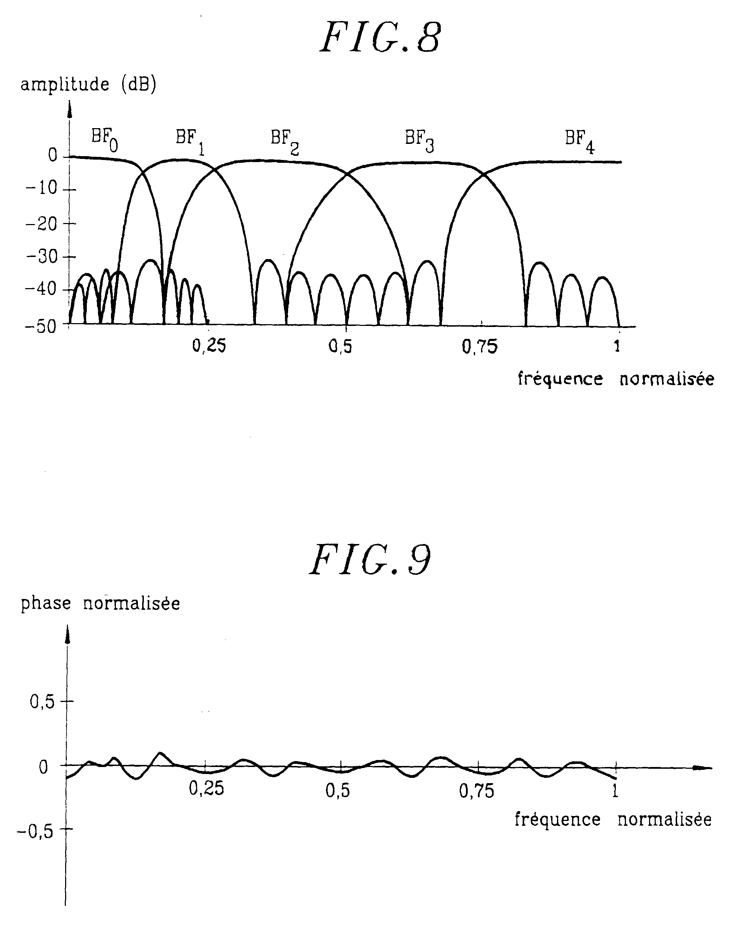

Le dernier étage de transformation 163₁ comprend seulement un étage élémentaire 164₁ dont les première et seconde entrées sont reliées respectivement aux sorties des commutateurs dans les étages 164_{2,1} et 164_{2,2} . La sortie du commutateur dans l'étage 164₁ transmet des séquences {sc(0,1,2,3,4,5,6,7)} du signal sc codé en cinq sous-bandes de fréquence BF_{O} à BF₄ dont le spectre et la réponse de phase sont montrées à titre d'exemple aux figures 8 et 9.

En référence à la figure 6, l'analyseur 24 correspondant au synthétiseur montré à la figure 5 et relatif au décodage d'un signal codé SC à cinq sous-bandes BF_{O} à BF₄ est également structuré en trois étages de transformation de profondeurs respectives 1, 2 et 3 à base de combinaison de circuits numériques élémentaires de filtrage et transformation de Fourier directe 244 et de lignes à retard 245. Les circuits élémentaires et lignes à retard dans les étages d'analyseur 243₁, 243₂ et 243₃ sont respectivement en nombres égaux et répartis de manière similaire aux circuits élémentaires et lignes à retard dans les étages de transformation 163₁, 163₂ et 163₃ dans le synthétiseur.

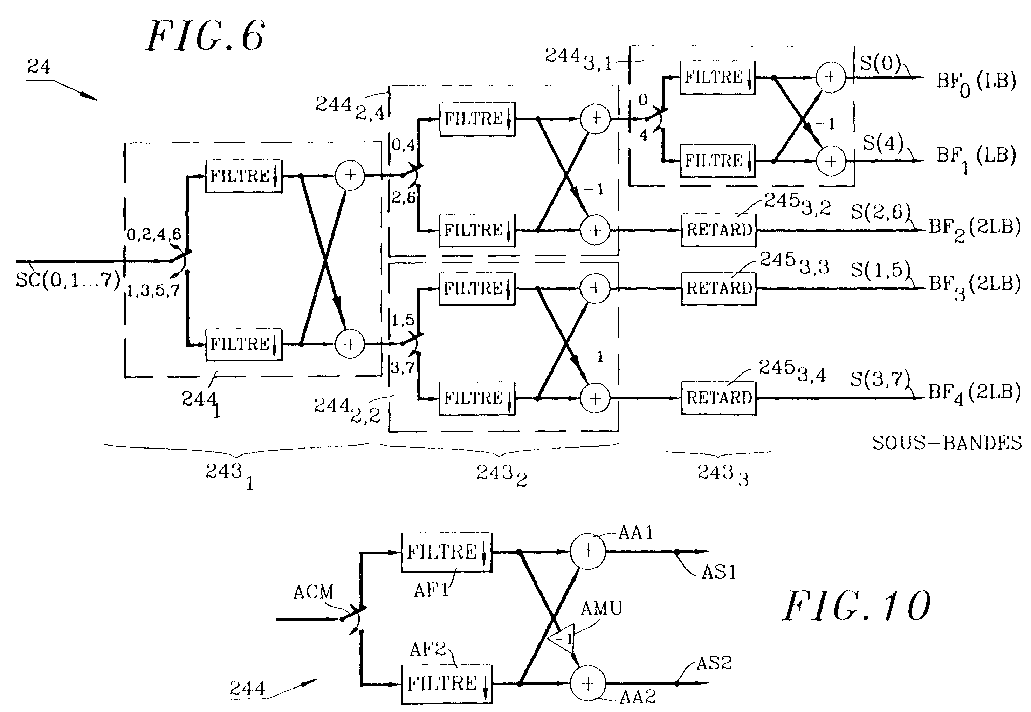

Comme montré très schématiquement à la figure 10, un circuit numérique élémentaire de filtrage et transformation 244 dans l'analyseur comporte un commutateur d'entrée à deux sorties ACM, des premier et second filtres numériques AF1 et AF2, deux sommateurs de sortie AA1 et AA2 et un multiplieur par -1 AMU. Des première et seconde sorties du commutateur ACM sont reliées respectivement aux entrées des filtres AF1 et AF2. La sortie du premier filtre AF1 est reliée directement à une première entrée du premier sommateur AA1 et à travers le multiplieur AMU à une seconde entrée du second sommateur AA2. La sortie du second filtre est reliée directement à la seconde entrée du sommateur AA1 et la première entrée du sommateur AA2. Les sorties des sommateurs AA1 et AA2 constituent des première et seconde sortie de signal décodé du circuit élémentaire 244. Ainsi des séquences à deux éléments d'un signal appliqué à l'entrée du commutateur ACM sont divisées alternativement en deux par des basculements de ce commutateur à la moitié de la fréquence d'échantillonnage dudit signal appliqué et subissent une transformée de Fourier directe à deux points dans l'étage 244 qui produit deux sous-séquences transformées aux sorties AS1 et AS2. Un tel circuit élémentaire dans un étage de profondeur k effectue ainsi une décimation temporelle de séquence entre l'étage de transformation précédent de profondeur k-1 et l'étage de transformation suivant de profondeur k+1. Les filtres AF1 et AF2 comprennent ainsi des filtres de décimation, au lieu des filtres d'interpolation dans les filtres SF1 et SF2. La largeur de bande de fréquence des filtres dans les étages de transformation de l'analyseur et corollairement, la fréquence d'échantillonnage sont ainsi réduites d'un facteur 2 d'un étage au suivant.

Le premier étage de transformation 243₁ dans l'analyseur est constitué par un étage élémentaire 244₁ dont l'entrée de commutateur reçoit après échantillonnage le signal codé sc délivré par le circuit de transposition 21, c'est-à-dire une succession de séquences codées reçues à 8 éléments {SC(0,1,2,3,4,5,6,7)}. Les filtres dans l'étage 244₁ ont des bandes passantes de largeur 4LB comme celles des filtres dans le circuit 164₁ du synthétiseur. Les première et seconde sorties de sommateur de l'étage 243₁ produisent des signaux décodés S(0,2,4,6) et S(1,3,5,7) respectivement.

L'étage intermédiaire 243₂ de l'analyseur comprend deux circuits élémentaires parallèles 244_{2,1} et 244_{2,2} dont les entrées de commutateur sont reliées respectivement aux première et seconde sortie de l'étage précédant 243₁. Les filtres dans les étages 244_{2,1} et 244_{2,2} ont des bandes passantes de largeur 2LB comme celles des filtres dans les circuits 164_{2,1} et 164_{2,2} du synthétiseur. Les première et seconde sorties de sommateur du circuit élémentaire 244_{2,1} produisent des signaux décodés S(0,4) et S(2,6), tandis que les première et seconde sorties de sommateur de l'étage élémentaire 244_{2,2} produisent des signaux décodés S(1,5) et S(3,7).

Le dernier étage de transformation 243₃ selon la réalisation illustrée comprend en parallèle un circuit élémentaire 244_{3,1} et trois lignes à retard 245_{3,2} , 245_{3,3} et 245_{3,4} . L'entrée de commutateur du circuit 244_{3,1} dans lequel les deux filtres ont des bandes passantes de largeur LB comme celles des filtres dans le circuit 164_{3,1} du synthétiseur, et l'entrée de la ligne à retard 245_{3,2} sont respectivement reliées aux première et seconde sorties de sommateur du circuit élémentaire 244_{2,1}. Les entrées des deux autres lignes à retard sont reliées respectivement aux première et seconde sorties de.sommateur du circuit 244_{2,2}.

Les première et seconde sorties du circuit 244_{3,1} restituent des signaux échantillonnés décodés S(1) et S(4) correspondant aux signaux initiaux s(1) et s(4), tandis que les sorties des lignes à retard 265_{3,2}, 265_{3,3} et 265_{3,4} restituent respectivement des signaux échantillonnés décodés S(2,6), S(1,5) et S(3,7) correspondant aux signaux initiaux s(2,6), s(1,5) et s(3,7). De manière analogue au démultiplexeur 15 dans le dispositif de codage 14, le multiplexeur 25 dans le dispositif de décodage 23 est programmé de manière à multiplexer les éléments (échantillons) simples {S(1)} et {S(4)} et les doublets {S(2,6)}, {S(1,5)} et {S(3,7)} transmis par les cinq sorties de l'étage de transformation 243₃ en des séquences décodées {S(0,1,2,3,4,5,6,7)}.

Comme dans le synthétiseur, les trois lignes à retard dans l'analyseur contribuent au maintien du synchronisme des signaux décodés en parallèle. D'autres variantes peuvent être envisagées. Par exemple, une, deux ou trois des lignes à retard 245_{3,2}, 245_{3,3} et 245_{3,4} peuvent être remplacées chacune par un circuit élémentaire de filtrage et transformation à deux points 244, parallèle au circuit 244_{3,1}; lorsque le signal SC est à décoder relativement à un codage initial à quatre sous-bandes de largeur LB et deux sous-bandes de largeur 2LB, l'étage 243₃ comprend deux circuits 244 et deux lignes à retard 245; lorsque le signal SC est à décoder relativement à un codage initial à six sous-bandes de largeur LB et une sous-bande de largeur 2LB, l'étage 243₃ comprend trois circuits 244 et une ligne à retard 245; lorsque le signal SC est à décoder relativement à un codage initial à huit sous-bandes de largeur LB, le synthétiseur arborescent est équivalent à la première réalisation montrée à la figure 4 avec N=8. Selon d'autres exemples, lorsque le signal SC est à décoder relativement à quatre sous-bandes de largeur 2LB, l'étage 243₃ est supprimé; lorsque le signal SC est à décoder relativement à une unique sous-bande de largeur 4LB, le circuit 244_{2,2} et les lignes à retard 245_{3,3} et 245_{3,4} sont remplacées par une ligne à retard imposant un retard sensiblement égal au double de celui d'une ligne à retard 245 et correspondant aux durées de traitement de signaux dans les circuits 244_{2,1} et 244_{3,1}.

Selon d'autres réalisations, les synthétiseur et analyseur sont utilisés pour émettre et recevoir des signaux radar ou sonar.

Comme montré à la figure 11, l'émetteur la d'un système radar ou sonar comprend, en outre, n générateurs de séquences pseudo-aléatoires 15a_{O} à 15aₙ₋₁ , un synthétiseur 16a relié aux sorties parallèles des générateurs, et d'une manière analogue à l'émetteur 1, un circuit de transposition à fréquence porteuse 11a, un amplificateur 12a et une antenne d'émission 13a qui sont reliés en série à la sortie du synthétiseur 16a.

Chacun des générateurs 15a_{O} à 15aₙ₋₁ génère pour chaque impulsion répétitive radar/sonar au moins une séquence pseudo-aléatoire de grande longueur prédéterminée s_{O} à sₙ₋₁ de sorte qu'elle soit orthogonale avec les séquences générées simultanément par les autres générateurs; en d'autres termes, la fonction d'intercorrélation entre deux séquences pseudo-aléatoires est quasiment nulle lorsque le nombre d'éléments dans la séquence est très grand et tend vers l'infini. Chacun des générateurs comprend en sortie un convertisseur analogique-numérique de manière à adapter le débit de la séquence générée à celui de l'entrée correspondante du synthétiseur et donc de la largeur de la sous-bande de fréquence correspondante. D'une manière générale, le synthétiseur 16a est du type de celui montré à la figure 5, avec n entrées, où n est inférieur à N=2^{K}.

Lorsque la bande de fréquence utile du signal codé sc à émettre est de l'ordre de 10% de la fréquence porteuse, les largeurs de toutes les sous-bandes peuvent être identiques et donc être en nombre N=2^{K}. Dans ce cas, les séquences transmises par les générateurs ont des débits identiques et le synthétiseur 16a est du type de celui montré à la figure 3, ou de celui montré à la figure 5 avec des étages de transformation ne comprenant que des circuits élémentaires à deux points. Le radar ou sonar ainsi réalisé est dit à porteuses multiples en bande étroite.

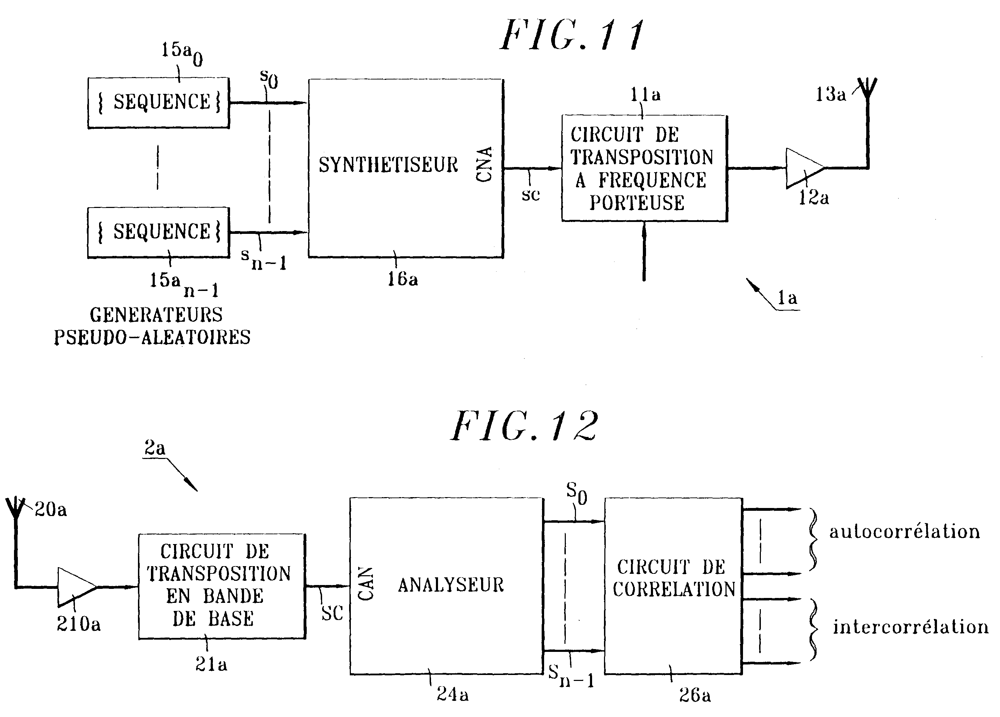

Le récepteur radar ou sonar 2a correspondant à l'émetteur la est montré à la figure 12. On y retrouve successivement une antenne de réception 20a, un circuit de transposition en bande de fréquence de base 21a précédé de moyens d'amplification 210a, et un analyseur 24a. Les n signaux décodés S_{O} à Sₙ₋₁ sortant de l'analyseur sont appliqués en parallèle à des moyens de traitement de voies comprenant notamment un circuit de corrélation 26a. Le circuit de corrélation calcule le produit d'autocorrélation propre à chacune des voies, ainsi que les produits d'intercorrélation entre les diverses voies, en vue de détecter la position et la vitesse des cibles et reconnaître celles-ci.

D'une part, les pics de la fonction d'autocorrélation ainsi obtenue pour chaque voie sont représentatifs d'information sur la position des cibles à détecter. D'autre part, les pics des fonctions d'autocorrélation obtenues entre les voies à un instant donné sont représentatifs d'information sur la vitesse des cibles. D'autres informations peuvent être également obtenues à partir de produits d'intercorrélation croisés sur la diagonale des matrices de corrélation. Le récepteur peut ainsi disposer de la réponse temps-fréquence de chaque cible, et en particulier peut fournir une estimation de la vitesse de chaque cible indépendamment de l'estimation de la position de la cible. Du fait de l'indépendance des séquences pseudo-aléatoires orthogonales initiales et donc des sous-bandes de fréquence, les fonctions d'autocorrélation peuvent être limités au nombre de sous-bandes.

Selon une seconde réalisation de système radar ou sonar, lorsque la bande utile du signal émis est très large, l'émetteur et le récepteur d'un tel système à large bande comprennent respectivement M émetteurs élémentaires et une combinaison à M récepteurs élémentaires afin de pallier des limitations technologiques des moyens d'émission et réception à radiofréquences dans l'émetteur la et le récepteur 2a.

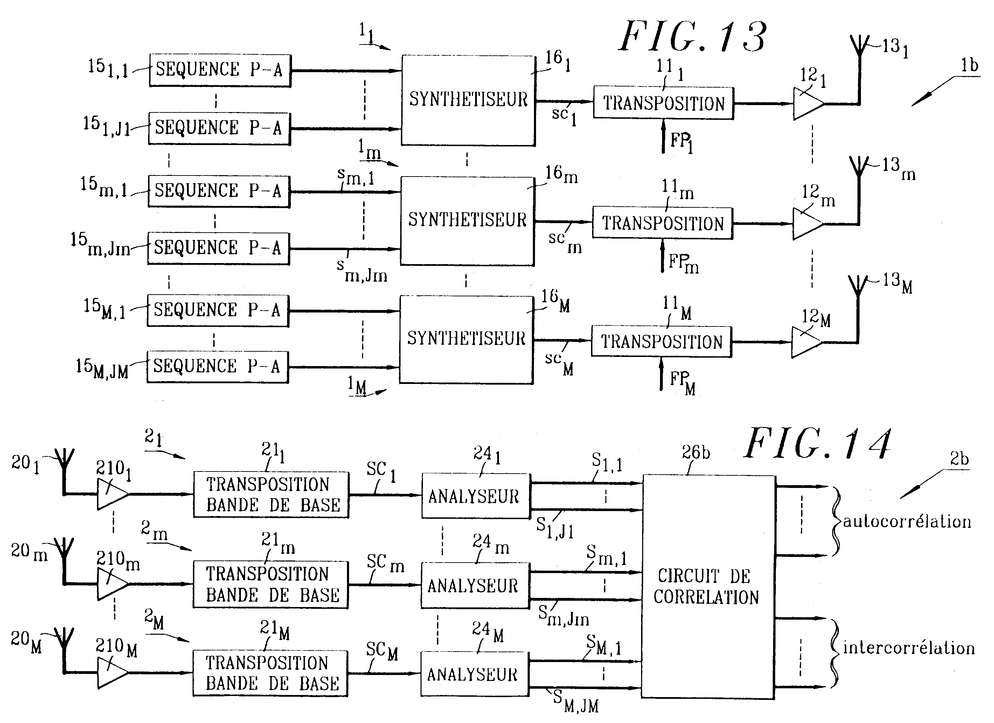

L'émetteur à large bande lb comprend plusieurs émetteurs élémentaires 1₁ à 1_{M} analogues à l'émetteur à bande étroite la, comme montré à la figure 13. Chaque émetteur élémentaire 1ₘ, où m dénote un indice entier compris entre 1 et un entier M, comprend un synthétiseur 16ₘ selon l'invention qui reçoit Jm séquences pseudo-aléatoires S_{m,1} à S_{m,Jm} en parallèle de Jm générateurs 15_{m,1} à 15_{m,Jm} afin de produire un signal codé scₘ en Jm sous-bandes de fréquence de largeurs a priori différentes, transposé à une fréquence porteuse FPₘ dans un circuit de transposition 11ₘ , puis amplifié dans un amplificateur 12ₘ et émis par une antenne 13ₘ. Les M porteuses FP₁ à FP_{M} sont différentes et sont choisies de sorte que les largeurs de bande utile des M signaux synthétisés sortant des synthétiseurs 16₁ à 16_{M} soient disjointes et consécutives. Les largeurs de bande des M signaux synthétisés sont a priori différentes, ou peuvent être égales, et les nombres entiers J1 à JM sont a priori différents, ou bien peuvent être égaux.

Le récepteur à large bande 2b est montré à la figure 14. Il comprend en parallèle M récepteurs élémentaires 2₁ à 2ₘ. Un récepteur élémentaire 2ₘ, où m dénote un indice entier compris entre 1 et M, comprend d'une manière analogue au récepteur 2a, une antenne de réception 20ₘ suivie d'un amplificateur 210ₘ , d'un circuit de transposition en bande de base respective 21ₘ et d'un analyseur 24ₘ à Jm sorties produisant Jm signaux décodés S_{m,1} à S_{m,Jm} correspondant aux séquences pseudo-aléatoires générées par les générateurs 15_{m,1} à 15_{m,Jm} .

Le récepteur 26 comprend également un circuit de corrélation 26b traitant les M groupes de signaux S_{1,1}-S_{1,J1} à S_{M,1}-S_{M,JM} sortant des analyseurs 24₁ à 24_{M} afin de calculer les fonctions d'autocorrélation et d'intercorrélation non seulement entre les M groupes de signaux mais également entre les signaux des groupes pour en déduire les positions et vitesses des cibles notamment.

## Revendications

1. Dispositif de codage pour coder plusieurs signaux échantillonnés parallèles (sₙ₋₁) en un signal codé (sc) à au plus N sous-bandes de fréquence, où N est un entier pair égal à 2^{k} et K est un entier quelconque positif,
caractérisé en ce que
les fréquences d'échantillonnage des signaux échantillonnés et les largeurs des sous-bandes sont respectivement des produits d'une fréquence d'échantillonnage de référence par des facteurs 2^{k} et des produits d'une largeur de bande de référence (LB) par des facteurs 2^{k} , où k est un entier compris entre 0 et K, et le signal codé présente une fréquence d'échantillonnage égale à la somme des fréquences d'échantillonnage des signaux échantillonnés, et
le dispositif de codage comprend plusieurs circuits numériques élémentaires de transformation de Fourier inverse à deux points et de filtrage (164) qui sont reliés entre eux suivant une structure arborescente (16) convergeant à partir d'entrées parallèles recevant les signaux échantillonnés vers une sortie transmettant le signal codé échantillonné, des première et seconde entrées de chacun des circuits élémentaires étant respectivement reliées soit à deux entrées recevant deux signaux échantillonnés à la fréquence de référence, soit chacune à la sortie d'un circuit élémentaire ou à la sortie d'un moyen à retard (165) recevant un signal échantillonné à une fréquence supérieure à la fréquence de référence, et à la sortie (SCM) du circuit élémentaire (164) étant reliée soit à l'une des deux entrées d'un circuit élémentaire, soit à la sortie transmettant le signal codé échantillonné.

2. Dispositif de codage conforme à la revendication 1, dans lequel un circuit numérique élémentaire de transformation et filtrage (164) comprend
- un moyen de transformation de Fourier inverse à deux points (SS1, SS2, SMU) ayant deux entrées confondues avec les première et seconde entrées (SE1, SE2) du circuit élémentaire,
- des premier et second moyens numériques de filtrage à interpolation (SF1, SF2) reliés à des sorties de sommateur (SA1, SA2) du moyen de transformation, filtrant dans des bandes de fréquence ayant une largeur qui est dans un rapport avec la bande de référence (LB) égal à l'exposant de puissance de deux dans le rapport de la fréquence d'échantillonnage de signaux reçus aux première et seconde entrées (SE1, SE2) avec la fréquence de référence, et interpolant avec un facteur égal à deux, et
- un moyen de commutation (CM) ayant deux entrées reliées aux sorties des premier et second moyens de filtrage et basculant au double de la fréquence d'échantillonnage des signaux reçus aux premières et secondes entrées (SE1, SE2).

3. Dispositif de codage conforme à la revendication 1 ou 2, dans lequel le moyen à retard (165) impose un retard sensiblement égal au produit de la durée de traitement de signaux dans un circuit élémentaire (164) et de l'exposant de puissance de deux dans le rapport de la fréquence d'échantillonnage du signal échantillonné retardé par le moyen à retard avec la fréquence de référence.

4. Emetteur (1) d'un signal numérique (sm), comprenant le dispositif de codage (14) conforme à l'une quelconque des revendications 1 à 3, incluant en entrée un moyen (15) pour échantillonner et démultiplexer le signal numérique (sm) en lesdits signaux échantillonnés (sₙ₋₁) en fonction de leurs fréquences d'échantillonnage, et transmettant le signal codé en sous-bandes (sc) à des moyens de transposition et d'émission à fréquence porteuse (11, 12, 13).

5. Emetteur radar ou sonar (1a) comprenant plusieurs moyens (15a_{O} - 15aₙ₋₁) pour générer répétitivement des séquences pseudo-aléatoires orthogonales en tant que signaux échantillonnés (sₙ₋₁), et le dispositif de codage (16a) conforme à l'une quelconque des revendications 1 à 3, et transmettant le signal codé en sous-bandes à des moyens de transposition et d'émission à fréquence porteuse (11a, 12a, 13a).

6. Système d'émission radar ou sonar (1b) comprenant plusieurs émetteurs (1₁ à 1_{M}) conformes à la revendication 5, les fréquences porteuses (F_{P1} à F_{PM}) relatives aux émetteurs étant différentes et les groupes de sous-bandes de fréquence relatifs aux dispositifs d'émission étant disjoints.

7. Dispositif de décodage pour décoder un signal codé (SC) à au plus N sous-bandes de fréquence tel que celui produit par le dispositif de codage conforme à l'une quelconque des revendications 1 à 3, en plusieurs signaux échantillonnés parallèles (Sₙ₋₁), où N est un entier pair égal à 2^{K} et K est un entier quelconque positif,
caractérisé en ce que
les fréquences d'échantillonnage des signaux échantillonnés et les largeurs des sous-bandes sont respectivement des produits d'une fréquence d'échantillonnage de référence par des facteurs 2^{k} et des produits d'une largeur de bande de référence (LB) par des facteurs 2^{k}, où k est un entier compris entre 0 et K, et le signal codé présente une fréquence d'échantillonnage égale à la somme des fréquences d'échantillonnage des signaux échantillonnés, et
le dispositif de décodage comprend plusieurs circuits numériques élémentaires de filtrage et de transformation de Fourier directe à deux points (244) qui sont reliés entre eux suivant une structure arborescente (24) divergeant à partir d'une entrée recevant le signal codé échantillonné vers des sorties parallèles transmettant les signaux échantillonnés, une entrée (ACM) d'un circuit élémentaire (244) étant reliée soit à l'entrée recevant le signal codé, soit à l'une des deux sorties d'un circuit élémentaire, et des première et seconde sorties (AS1,AS2) d'un circuit élémentaire étant respectivement reliées soit chacune à l'entrée d'un circuit élémentaire, ou à une entrée d'un moyen à retard (245) transmettant un signal échantillonné à une fréquence supérieure à la fréquence de référence, soit à deux sorties transmettant des signaux échantillonnés à la fréquence de référence.

8. Dispositif de décodage conforme à la revendication 7, dans lequel un circuit numérique élémentaire de filtrage et transformation (244) comprend
- un moyen de commutation (ACM) ayant une entrée confondue avec celle du circuit élémentaire et deux sorties et basculant à la moitié de la fréquence d'échantillonnage du signal reçu à l'entrée du moyen de commutation,
- des premier et second moyens numériques de filtrage à décimation (AF1,AF2) reliés respectivement aux sorties du moyen de commutation, filtrant dans des bandes de fréquences ayant une largeur qui est dans un rapport avec la bande de référence (LB) égal à la moitié de l'exposant de puissance de deux dans le rapport de la fréquence d'échantillonnage du signal reçu à l'entrée du moyen de commutation avec la fréquence de référence, et décimant avec un facteur égal à un demi, et
- un moyen de transformation de Fourier directe à deux points (AA1, AA2, AMU) ayant deux entrées reliées aux sorties des premiers et second moyens de filtrage et deux sorties confondues avec les sorties du circuit élémentaire (244).

9. Dispositif de décodage conforme à la revendication 7 ou 8, dans lequel le moyen à retard (265) impose un retard sensiblement égal au produit de la durée de traitement de signaux dans un circuit élémentaire (244) et de l'exposant de puissance de deux dans le rapport de la fréquence d'échantillonnage du signal retardé par le moyen à retard avec la fréquence de référence.

10. Récepteur (2) d'un signal numérique (SM), comprenant le dispositif de décodage (23) conforme à l'une quelconque des revendications 7 à 9, recevant à travers des moyens de réception et de transposition en bande de base (20,210,21), le signal codé en sous-bandes (SC) tel qu'émis par l'émetteur conforme à la revendication 4, et incluant en sortie un moyen (25) pour multiplexer lesdits signaux échantillonnés (Sₙ₋₁), ledit signal numérique (SM) en fonction des fréquences d'échantillonnage des signaux échantillonnés.

11. Récepteur radar ou sonar (2a) comprenant le dispositif de décodage (24a) conforme à l'une quelconque des revendications 7 à 9 et recevant à travers des moyens de réception et de transposition en bande de base (20a, 210b, 21b) le signal codé en sous-bandes tel qu'émis par l'émetteur conforme à la revendication 5, et des moyens (26a) pour autocorréler et intercorréler les signaux échantillonnés produits par le dispositif de décodage afin d'en déduire en outre des position et vitesse de cibles.

12. Système de réception radar ou sonar (2b) comprenant plusieurs dispositifs de décodage (24₁ à 24_{M}) conformes à l'une quelconque des revendications 7 à 9 et recevant respectivement à travers plusieurs moyens de réception et de transposition en bandes de base respectives des signaux codés en sous-bandes (SCₘ) tels qu'émis par lesdits plusieurs émetteurs d'émission (1₁ à 1_{M}) dans le système d'émission (1b) conforme à la revendication 6, et des moyens (26b) pour autocorréler et intercorréler tous les signaux échantillonnés produits par les dispositifs de décodage (24₁ à 24_{M}) afin d'en déduire en outre des position et vitesse de cibles.

## Patentansprüche

1. Kodiereinrichtung zum Kodieren mehrerer paralleler abgetasteten Signale (sₙ₋₁) in ein kodiertes Signal (sc) von höchstens N Frequenz-Teilbändern, wobei N geradzahlig, d.h. gleich 2^{k} und K ein positive ganze Zahl ist,
dadurch gekennzeichnet,
daß die Abtastfrequenzen der abgetasteten Signale und die Breiten der Teilbänder jeweils ein Produkt einer Abtastreferenzfrequenz mal Faktoren 2^{k} und ein Produkt einer Referenzbanbreite (LB) mal Faktoren 2^{k} sind, wobei k eine zwischen 0 und K liegende ganze Zahl ist, und das kodierte Signal eine Abtastfrequenz hat, die gleich der Summe der Abtastfrequenzen der abgetasteten Signale ist,
und daß die Kodiereinrichtung mehrere elementare, digitale, an zwei Punkten invertierte Fourier-Transformations- und Filterschaltungen (164) aufweist, die untereinander entsprechend einer baumartigen Struktur (16) verbunden sind, welche von parallelen, die abgetasteten Signalen aufnehmenden Eingängen zu einem Ausgang konvergiert, der das kodierte abgetastete Signal überträgt, wobei erste und zweite Eingänge jeder der elementaren Schaltungen jeweils entweder mit zwei Eingängen, die zwei abgetastete Signale von der Referenzfrequenz aufnehmen, oder jeder mit einem Ausgang einer elementaren Schaltung oder einem Ausgang eines Verzögerungsmittels (165) verbunden sind, das ein abgetastete Signal einer Frequenz, die oberhalb der Referenzfrequenz liegt, aufnimmt, und wobei der Ausgang (SCM) der elementaren Schaltung (164) entweder mit einem der beiden Eingänge einer elementaren Schaltung oder mit dem das kodierte abgetastete Signal übertragenden Ausgang verbunden ist.

2. Kodiereinrichtung nach Anspruch 1, in der eine elementare digitale Transformations- und Filterschaltung (164) aufweist
- eine an zwei Punkten (SS1, SS2, SMU) invertierte Fourier-Transformationseinrichtung mit zwei Eingängen, die mit den ersten und zweiten Eingängen (SE1, SE2) der elementaren Schaltung verschmolzen sind,
- erste und zweite digitale Filterinterpolationsmittel (SF1, SF2), die mit den Ausgängen des Summierers (SA1, SA2) der Transformationsmittel verbunden sind und in den Frequenzbändern filtern, deren Breite mit dem Referenzband (LB) in einem Verhältnis gleich dem Exponenten der Zweier-Potenz in dem Verhältnis der Abtastfrequenz der an der ersten und zweiten Eingängen (SE1, SE2) aufgenommenen Signale zu der Referenzfrequenz steht, und mit einem Faktor von zwei interpolieren, und
- Umschaltmittel (CM) mit zwei Eingängen, die an die Ausgänge der ersten und zweiten Filtermittel angeschlossen sind und mit dem Doppelten der Abtastfrequenz der an den ersten und zweiten Eingängen (SE1, SE2) aufgenommenen Signale hin und her schalten.

3. Kodiereinrichtung nach Anspruch 1 oder 2, in welcher das Verzögerungsmittel (165) eine Verzögerung von ungefähr gleich dem Produkt der Signalverarbeitungsdauer in einer elementaren Schaltung (164) und dem Exponenten der Zweier-Potenz in dem Verhältnis der Abtastfrequenz des durch das Verzögerungsmittel verzögerten Abtastsignals zu der Referenzfequenz einführt.

4. Sender (1) eines digitalen Signals (sm) mit der Kodiereinrichtung (14) nach einem der Ansprüche 1 bis 3, der am Eingang ein Mittel (15) zum Abtasten und Demultiplexen des digitalen Signals (sm) in die genannten abgetasteten Signale (sₙ₋₁) in Abhängigkeit ihrer Abtastfrequenzen aufweist und das kodierte Signal in Teilbändern (sc) zu den Transpositions- und Trägerfrequenz-Sendemitteln (11, 12, 13) überträgt.

5. Radar- oder Schallsender (1a) mit mehreren Mitteln (15a₀ - 15aₙ₋₁) zum jeweiligen Erzeugen von orthogonalen pseudoaleatorischen Sequenzen als abgetastete Signale (sₙ₋₁), sowie mit der Kodiereinrichtung (16a) nach einem der Ansprüche 1 bis 3, und der das in Teilbändern kodierte Signal zu den Transpositions- und Trägerfrequenzsendemittel (11a, 12a, 13a) überträgt.

6. Schall- oder Radar-Sendesystem (1b) mit mehreren Sendern (1₁ bis 1_{M}) nach Anspruch 5, wobei die Trägerfrequenzen (F_{P1} bis F_{PM}) der Sender unterschiedlich sind und die Frequenzteilbandgruppen der Sendeeinrichtung unverbunden sind.

7. Dekodiereinrichtung zum Dekodieren eines kodierten Signals von höchstens N Frequenzteilbändern wie dasjenige, das von der Kodiereinrichtung nach einem der Ansprüche 1 bis 3 erzeugt worden ist, in mehrere parallele abgetastete Signale (Sₙ₋₁), wobei N geradzahlig entsprechend 2^{K} mit K eine positive ganze Zahl ist,
dadurch gekennzeichnet, daß
die Abtastfrequenzen der abgetasteten Signale und die Breiten der Teilbänder jeweils ein Produkt aus einer Abtastreferenzfrequenz mit Faktoren 2^{k}, und einem Produkt der Referenzbandbreite (LB) mit Faktoren 2^{k} sind, wobei k eine ganze Zahl zwischen Null und K ist, wobei das kodierte Signal eine Abtastfrequenz gleich der Summe der Abtastfrequenzen der abgetasteten Signale hat, und
daß die Dekodiereinrichtung mehrere elementare digitale Filter- und an zwei Punkten direkte Fourier Transformationsschaltungen (244) aufweist, welche untereinander entsprechend einer Baumstruktur (24) verbunden sind, welche von einem das kodierte Abtastsignal aufnehmenden Eingang zu parallelen Ausgängen divergiert, die die Abtastsignale übertragen, wobei ein Eingang (ACM) einer elementaren Schaltung (244) entweder mit dem das kodierte Signal aufnehmenden Eingang oder mit einem der beiden Ausgänge der elementaren Schaltung verbunden ist und erste und zweite Ausgänge (AS1, AS2) einer elementaren Schaltung jeweils entweder mit jedem Eingang einer elementaren Schaltung oder einem Eingang eines Verzögerungsmittels (245) verbunden sind, welches ein abgetastetes Signal mit einer Frequenz oberhalb der Referenzfrequenz überträgt, oder mit zwei Eingängen verbunden sind, die die abgetasteten Signale von Referenzfrequenz übertragen.

8. Dekodiereinrichtung nach Anspruch 7, in welcher eine digitale elementare Filter- und Transformationsschaltung (244) aufweist
- Umschaltmittel (ACM) mit einem Eingang, der mit demjenigen der elementaren Schaltung verschmolzen ist, und mit zwei Ausgängen und mit der Hälfte der Abtastfrequenz des am Eingang des Umschaltmittels empfangenen Signals hin und her schaltet,
- erste und zweite digitale Dezimationsfiltermittel (AF1, AF2), die jeweils mit den Ausgängen des Umschaltmittels verbunden sind und in den Frequenzbändern filtern, deren Breite mit dem Referenzband (LB) in einem Vehältnis gleich der Hälfte des Exponenten der Zweier-Potenz in dem Verhältnis der Abtastfrequenz des am Eingang des Umschaltmittels empfangenen Signals zu der Referenzfrequenz steht und mit einem Faktor gleich einhalb dezimiert und an zwei Punkten (AA1, AA2, AMU) direkte Fourier Transformationsmittel, welche zwei mit den Ausgängen der ersten und zweiten Filtermittel verbundene Eingänge und zwei mit den Ausgängen der elementaren Schaltung (244) verschmolzene Ausgänge hat.

9. Dekodiereinrichtung nach Anspruch 7 oder 8, in welcher das Verzögerungsmittel (265) eine Verzögerung ungefähr gleich dem Produkt aus der Signalverarbeitungsdauer in einer elementaren Schaltung (244) und dem Zweier-Exponenten in dem Verhältnis der Abtastfrequenz des von dem Verzögerungsmittel verzögerten Signals zu der Referenzfrequenz einführt.

10. Empfänger (2) eines digitalen Signals (SM) mit der Dekodiereinrichtung (23) nach einem der Ansprüche 7 bis 9, welcher über Empfangs- und Grundbandtranspositionsmittel (20, 210, 21) das im Teilband (SC) kodierte Signal wie dasjenige, das von dem Sender nach Anspruch 4 abgegeben worden ist, aufnimmt und am Ausgang ein Mittel (25) zu multiplexen der abgetasteten Signale (Sₙ₋₁) in das digitale Signal (SM) in Abhängigkeit von den Abtastfrequenzen der abgetasteten Signale umfaßt.

11. Schall- oder Radarempfänger (2a) mit der Dekodiereinrichtung (24a) nach einem der Ansprüche 7 bis 9, der über Empfangs- und Grundband-Transpositionsmittel (20a, 210b, 21b) das in Teilbändern kodierte Signal wie dasjenige, das von dem Sender nach Anspruch 5 abgegeben worden ist, aufnimmt, sowie Mittel (26a) zum Autokorrelieren und Interkorrelieren der abgetasteten Signale aufweist, die von der Dekodiereinrichtung erzeugt worden sind, um unter anderem die Position und Geschwindigkeit von Zielen abzuleiten.

12. Schall- oder Radarempfangssystem (2b) mit mehreren Dekodiereinrichtungen (24₁ bis 24_{M}) nach einem der Ansprüche 7 bis 9, welches jeweils in Teilbändern (SCₘ) kodierte Signale wie diejenigen, die von den mehreren Sendern (1₁ bis 1_{M}) in dem Sendesystem (1b) nach Anspruch 6 abgegeben worden sind, über mehrere Empfangs- und jeweilige Grundbänder-Transpositionsmittel empfängt, sowie Mittel (26b) zum Autokorrelieren und Interkorrelieren aller abgetasteten Signale aufweist, die von den Dekodiermitteln (24₁ bis 24_{M}) erzeugt worden sind, um u.a. die Position und Geschwindigkeit von Zielen zu ermitteln.

## Claims

1. A coding device for coding a number of parallel sampled signals (sₙ₋₁) into a single coded signal (sc) having at most N frequency sub-bands where N is an even integer equal to 2^{k} and K is any positive integer,
characterised in that
the sampling frequencies of the sampled signals and the sub-band bandwidths are respectively products of a reference sampling frequency by factors 2^{k} and products of a reference bandwidth (LB) by factors 2^{k} where k is an integer between 0 and K and the coded signal has a sampling frequency equal to the sum of the sampling frequencies of the sampled signals, and
the coding device comprises a number of elementary digital inverse two-point Fourier transformation and filtering circuits (164) which are interconnected in a tree structure (16) converging from parallel inputs receiving the sampled signals towards an output transmitting the sampled coded signal, first and second inputs of each of the elementary circuits being respectively connected either to two inputs receiving two signals sampled at the reference frequency, or each to the output of an elementary circuit or to the output of a delay means (165) receiving a signal sampled at a higher frequency than the reference frequency, the output (SCM) of the elementary circuit (164) being connected either to one of the two inputs of an elementary circuit or to the output transmitting the sampled coded signal.

2. A coding device according to claim 1 wherein an elementary digital transformation and filtering circuit (164) comprises:
a two-point inverse Fourier transformation means (SS1, SS2, SMU) having two inputs merged with the first and second inputs (SE1, SE2) of the elementary circuit;
first and second digital interpolation filtering means (SF1, SF2) connected to adder outputs (SA1, SA2) of the transformation means, the interpolation means filtering in frequency bands having a width which is in a ratio to the reference band (LB) equal to the power-of-two exponent in the ratio of the received signals sampling frequency at the first and second inputs (SE1, SE2) to the reference frequency and interpolating with a factor of two, and
a selector means (CM) having two inputs connected to the outputs of the first and second filtering means and toggling at twice the sampling frequency of the signals received at the first and second inputs (SE1, SE2).

3. A coding device according to claim 1 or 2 wherein the delay means (165) produces a delay substantially equal to the product of the signal processing time in an elementary circuit (164) and of the power-of-two exponent in the ratio of the sampling frequency of the sampled signal delayed by the delay means to the reference frequency.

4. A transmitter (1) of a digital signal (sm) comprising the coding device (14) according to any of claims 1 to 3 including at its input a means (15) for sampling and demultiplexing the digital signal (sm) into the sampled signals (sₙ₋₁) in dependence upon their sampling frequencies and transmitting the signal coded in sub-bands (sc) to means (11, 12, 13) for transposition and transmission at carrier frequency.

5. A radar or sonar transmitter (la) comprising a number of means (15aₒ - 15aₙ₋₁) for the repetitive generation of the orthogonal pseudo-random sequences as sampled signals (sₙ₋₁) and the coding device (16a) according to any of claims 1 to 3 and transmitting the signal coded in sub-bands to means (lla, 12a, 13a) for transposition and transmission at carrier frequency.

6. A radar or sonar transmission system (1b) comprising a number of transmitters (1₁ to 1_{M}) according to claim 5, the carrier frequencies (F_{P1} to F_{PM}) of the transmitters being different and the frequency sub-band groups of the transmission systems being disjoint.

7. A decoding device for decoding a coded signal (SC) having at most N frequency sub-bands such as the signal produced by the coding device according to any of claims 1 to 3 into a number of parallel sampled signals (Sₙ₋₁) where N is an even integer equal to 2^{k} and K is any positive integer,
characterised in that
the sampling frequencies of the sampled signals and the sub-band widths are respectively products of a reference sampling frequency by factors 2^{k} and products of a reference bandwidth (LB) by factors 2^{k} where k is an integer between 0 and K and the coded signal has a sampling frequency equal to the sum of the sampling frequencies of the sampled signals, and
the decoding device comprises a number of elementary digital filtering and direct two-point Fourier transformation circuits (244) which are interconnected in a tree structure (24) diverging from an input which receives the sampled coded signal towards parallel outputs transmitting the sampled signals, an input (ACM) of an elementary circuit (244) being connected either to the input receiving the coded signal or to one of the two outputs of an elementary circuit, first and second outputs (AS1, AS2) of an elementary circuit being respectively connected either each to the input of an elementary circuit or to an input of a delay means (245) transmitting a signal sampled at a frequency higher than the reference frequency or to two outputs transmitting signals sampled at the reference frequency.

8. A decoding device according to claim 7 wherein an elementary digital filtering and transformation circuit (244) comprises:
selector means (ACM) having an input merged with the input of the elementary circuit and two outputs and toggling at half the sampling frequency of the signal received at the input of the selector means;
first and second digital decimation filtering means (AF1, AF2) respectively connected to the outputs of the selector means and filtering in frequency bands having a width which is in a ratio to the reference band (LB) equal to half the power-of-two exponent in the ratio of the sampling frequency of the signal received at the input of the selector means to the reference frequency and decimating with a factor of one half, and
a direct two-point Fourier transformation means (AA1, AA2, AMU) having two inputs connected to the outputs of the first and second filtering means and two outputs merged with the outputs of the elementary circuit (244).

9. A decoding device according to claim 7 or 8 wherein the delay means (265) produces a delay substantially equal to the product of the signal processing time in an elementary circuit (244) and of the power-of-two exponent in the ratio of the sampling frequency of the signal delayed by the delay means to the reference frequency.

10. A receiver (2) of a digital signal (SM) comprising the decoding device (23) according to any of claims 7 to 9 and receiving by way of the base-band receiving and transposition means (20, 210, 21) the signal coded in sub-bands (SC) as transmitted by the transmitter according to claim 4 and including at its output a means (25) for multiplexing the sampled signals (Sₙ₋₁) into the digital signal (SM) in dependence upon the sampling frequencies of the sampled signals.

11. A radar or sonar receiver (2a) comprising the decoding device (24a) according to any of claims 7 to 9 and receiving by way of the base-band reception and transposition means (20a, 210b, 21b) the signal coded in sub-bands as transmitted by the transmitter according to claim 5, and means (26a) to auto-correlate and inter-correlate the sampled signals produced by the decoding device in order also to deduce target positions and speeds therefrom.

12. A radar or sonar receiving system (2b) comprising a number of decoding devices (24₁ to 24_{M}) according to any of claims 7 to 9 and respectively receiving by way of a number of means for receiving and for transposing into respective base-bands signals coded in sub-bands (SCₘ) as transmitted by said several transmitters (1₁ to 1_{M}) in the transmission system (1b) according to claim 6, and means (26b) for auto-correlating and inter-correlating all the sampled signals produced by the decoding devices (24₁ to 24_{M}) in order also to deduce target positions and speeds therefrom.
